Europäisches Patentamt

European Patent Office

Office européen des brevets

(11) Numéro de publication : **0 481 888 A1**

(12) **DEMANDE DE BREVET EUROPEEN**

(21) Numéro de dépôt : **91402764.4**

(22) Date de dépôt : **16.10.91**

(51) Int. Cl.⁵ : **B64G 9/00,** G01N 1/22

(30) Priorité : **18.10.90 FR 9012907**

(43) Date de publication de la demande :
**22.04.92 Bulletin 92/17**

(84) Etats contractants désignés :
**DE ES GB IT**

(71) Demandeur : **AEROSPATIALE Société Nationale Industrielle
37, Boulevard de Montmorency
F-75781 Paris Cédex 16 (FR)**

(72) Inventeur : **Claramonte, Manuel
24, rue du Coteau
F-92370 Chaville (FR)**
Inventeur : **Bonnet, Guy
16, rue du Pré de Vèze
F-78250 Hardricourt (FR)**

(74) Mandataire : **Ilgart, Jean-Christophe et al
c/o Société de Protection des Inventions, 25,
rue de Ponthieu
F-75008 Paris (FR)**

(54) **Dispositif de protection et de libération d'un tube téléscopique.**

(57)    Dispositif de protection et de libération d'un tube télescopique dans un logement (9) délimité par un tube de protection (2) et par un couvercle (6) qui sont réunis par une soudure d'un matériau à bas point de fusion près duquel une résistance chauffante est placée. La fusion de la soudure permet de détacher le couvercle (6) et de déployer le tube télescopique (1) par la détente de ressorts (7). Ce moyen est très sûr, et la soudure a une très bonne imperméabilité aux gaz, ce qui protège le logement (9) de la dépressurisation.
    Applications aux astronefs.

FIG. 1 B

FIG. 1 C

FIG. 1 A

EP 0 481 888 A1

La présente invention concerne un dispositif de protection et de libération d'un tube télescopique.

Elle a été développée principalement pour des astronefs dont certaines missions, notamment le prélèvement d'échantillons d'atmosphère, ne peuvent être accomplies qu'à une distance minimale de l'astronef afin de s'affranchir des perturbations produites par sa présence. Le tube est déployé de manière irréversible après avoir été maintenu à l'état replié pendant éventuellement plusieurs années dans un logement fermé par un couvercle escamotable et délimité par ailleurs par une structure entourant le tube telle qu'un tube de protection. Il convient pendant cette période de maintenir la pressurisation du logement, c'est-à-dire qu'il faut interdire les fuites vers l'extérieur entre le tube de protection et le couvercle qui comprime le tube télescopique à l'état replié jusqu'à ce que le couvercle soit relâché pour autoriser le déploiement du tube télescopique. Les joints classiques d'étanchéité n'offrent pas une garantie suffisante.

Une autre difficulté de l'utilisation de tels dispositifs réside dans le système qui permet de détacher le couvercle du tube de protection. Les moyens de verrouillage mécanique sont relativement encombrants et compliqués, et on ne peut assurer sans réserves qu'ils sont en état de marche après une longue période d'inactivité.

La présente invention a pour objet un dispositif de protection et de libération d'un tube télescopique qui répond justement aux exigences rappelées précédemment.

Ce dispositif de protection et de libération d'un tube télescopique se caractérise en ce qu'il comprend des éléments élastiques pour actionner le déploiement du tube télescopique à partir d'un état replié, des moyens de guidage du déploiement du tube télescopique, un tube de protection entourant le tube télescopique, un couvercle fermant une extrémité du tube de protection et comprimant le tube télescopique à l'état replié, une soudure circulaire étanche aux gaz joignant le couvercle au tube de protection, et un dispositif de chauffage situé près de la soudure et apte à la faire fondre. Le couvercle et le tube télescopique sont distincts ou séparables.

Selon l'invention, le moyen de chauffage peut être une résistance électrique logée dans un creux ou un logement du tube de protection.

Selon une disposition commode, le couvercle se compose d'une face plane comprimant le tube télescopique et d'un rebord circulaire entourant l'extrémité du tube de protection. La soudure est alors placée entre le rebord et le tube de protection.

Un problème supplémentaire est toutefois soulevé par l'emploi d'un moyen de chauffage, car le moindre échauffement du tube télescopique et de son contenu peut avoir des répercussions sur la qualité des observations menées. Dans le cas de prélèvements d'échantillons d'atmosphères froides, certains aérosols essentiels pour la compréhension de phénomènes climatiques ou autres risquent en effet d'être vaporisés ou décomposés par l'échauffement avant d'être introduits dans un four de pyrolyse. Il faut donc limiter autant que possible la transmission de chaleur au tube télescopique. La réalisation de l'invention décrite ci-après comporte divers moyens qui peuvent être utilisés séparément ou en association. On peut tout d'abord interposer des barrières thermiques entre le dispositif de chauffage et le tube télescopique. La face externe du tube porteur peut être munie d'un revêtement émissif vers l'extérieur par rayonnement à proximité de la soudure et du moyen de chauffage.

Comme il est par ailleurs utile de ne pas gaspiller de l'énergie peu abondante dans un astronef, un rebord externe peut aussi être prévu pour entourer la partie du couvercle portant la soudure. Il présente de bonnes propriétés de réflexion de la chaleur rayonnée et renvoie une partie de celle-ci vers la soudure.

Un autre avantage d'une liaison fusible est que le dispositif de chauffage peut être doublé, le second dispositif de chauffage, indépendant du premier, étant utilisé en cas de défaillance du premier. Les systèmes de verrouillage mécanique n'offrent pas cette possibilité.

L'invention va maintenant être décrite plus en détail à l'aide des figures suivantes annexées à titre illustratif et non limitatif :

    – les figures 1A, 1B et 1C représentent les étapes de la libération du tube télescopique ;

    – la figure 2 représente le dispositif à l'état replié du tube télescopique ; et

    – la figure 3 représente l'extrémité de ce dispositif.

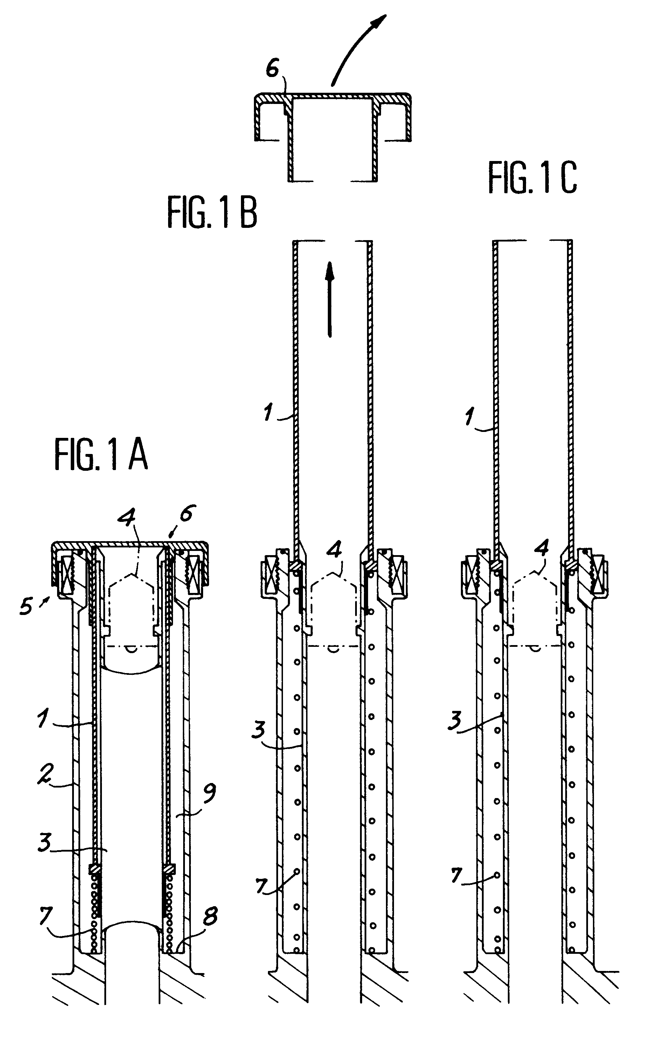

On se reporte aux figures 1A à 1C. Un tube télescopique 1 est entouré par un tube de protection 2 et entoure lui-même un tube de guidage 3 contenant un appareil 4 destiné à des prélèvements d'échantillons d'atmosphère et situé près de l'extrémité 5 ouverte du tube de guidage 3 et du tube de protection 2. Un couvercle 6 ferme au départ cette extrémité 5 ouverte et maintient le tube télescopique 1 à l'état replié en comprimant un ressort 7, responsable du déploiement du tube télescopique 1, entre celui-ci et le fond 8 d'un logement 9 délimité par le tube de protection 2 et par le couvercle 6.

Quand le couvercle 6 est détaché, le ressort 7 se détend et déploie le tube télescopique 1 hors du tube de protection 2. Le tube de guidage 3 assure un déploiement correct. Le couvercle 6 est entraîné par le tube télescopique 1 et projeté au loin quand le déploiement de celui-ci s'arrête. Cet état est représenté sur la figure 1B. Ensuite (figure 1C), un échantillon d'atmosphère suffisamment éloigné du tube de protection 2 et des structures auxquelles ce tube est attaché (telles que celles d'un astronef) peut être prélevé par l'appareil 4 en pénétrant avec l'écoulement aérodynamique à l'intérieur du tube télescopique 1 et éventuellement du tube de guidage 3. L'appareil 4 peut comprendre une pompe placée en aval du tube de guidage pour accélérer l'écoulement.

On n'a représenté dans cette réalisation en tant que tube télescopique 1 qu'un tronçon unique coulissant autour du tube interne 3. D'autres tronçons auraient pu être ajoutés. Ils auraient alors été concentriques au précédent et reliés entre eux par d'autres ressorts comprimés pour permettre leur déploiement.

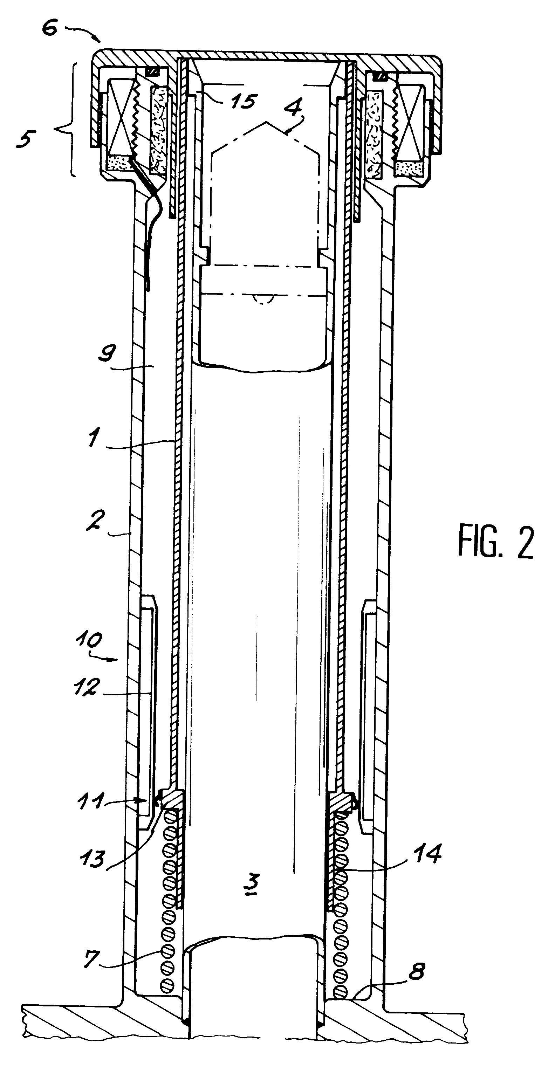

La figure 2 représente mieux certains détails de réalisation, en particulier des systèmes de ralentissement 10 formés par l'association d'une rampe élastique 12 fixée sur la face interne du tube de protection 2 et d'une bille 11 frottant sur la rampe élastique 12. Les billes 11 sont assujetties à une collerette 13 à l'arrière du tube télescopique 1 et au-dessous de laquelle le ressort 7 est comprimé. Les systèmes de ralentissement 10 limitent l'accélération du tube télescopique 1 au début de son déploiement, permettant ainsi que le déploiement ne s'amorce que lorsque la soudure a fondu uniformément.

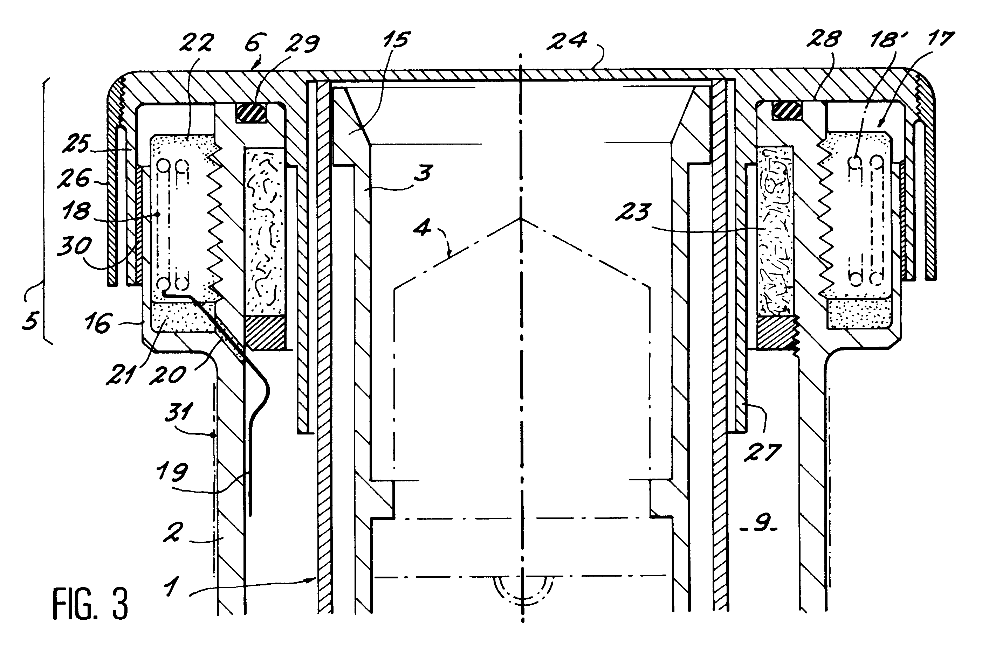

Le tube télescopique 1 s'achève au-dessous de la collerette 13 par une manchette 14 en forme d'enveloppe cylindrique qu'entoure le haut du ressort 7 et qui entoure elle-même le tube de guidage 3 avec un faible jeu. C'est cette manchette 14 qui assure une portée permettant le coulissement correct du tube télescopique sur le tube de guidage 3, ainsi qu'un rebord en saillie radiale 15 du tube de guidage 3, contre le couvercle 6, dont le diamètre n'est que de peu inférieur au diamètre interne du tube télescopique 1 au-dessus de la manchette 14. Le coulissement du tube télescopique 1 s'arrête quand la collerette 13 bute contre la saillie radiale 15. Les éléments à l'extrémité 5 du tube de protection 2 vont maintenant être décrits à l'aide de la figure 3.

Le tube de protection 2 s'épaissit à l'extrémité 5 par l'adjonction d'une cloison externe 16 qui entoure un creux annulaire 17. Le creux annulaire 17 renferme notamment une résistance 18 électrique circulaire dans sa partie la plus proche de la cloison externe 16. Une résistance 18' électrique optionnelle peut être logée côte à côte avec la précédente pour assurer une fonction redondante. Les résistances 18 et 18' sont alimentées en courant par des fils électriques 19 qui s'étendent à l'intérieur du logement 9 sur la face interne du tube de protection 2. Ils traversent un perçage 20 établi dans le tube de protection 2 pour arriver aux résistances 18 et 18'. Le perçage 20 et le fond du creux 17 sont remplis d'Araldite® pour maintenir les fils 19 en place. Le reste du creux est rempli par un ciment réfractaire 22. Une couche isolante 23 en matériau à faible coefficient d'émissivité s'étend par ailleurs sur la face interne du tube de protection 2, entre les résistances 18 et 18' et le tube télescopique 1.

Le couvercle 6 se compose d'une face plane 24, d'un rebord principal 25, d'un rebord externe 26 et d'un rebord interne 27, ces trois rebords étant circonférentiels. La face plane 24 sert à fermer le logement 9 ainsi qu'à comprimer le tube télescopique 1 à la position repliée. Elle est en outre appuyée contre la face plane d'extrémité 28 du tube de protection 2 ; un joint 29 torique d'étanchéité est comprimé entre les deux faces planes 24 et 28.

Le rebord principal 25 entoure la cloison externe 16 à peu de distance. Une soudure 30 circulaire et continue s'étend entre elles. La soudure 30 constitue le principal moyen d'étanchéité entre le logement 9 et l'extérieur en complément du joint 29, du ciment réfractaire 22 et de l'Araldite® 21. Elle est réalisée en un matériau à basse température de fusion. De tels matériaux ont souvent une porosité non négligeable, mais il est possible de choisir l'épaisseur et la largeur de la soudure 30 de sorte qu'elle soit rendue imperméable aux gaz. On obtient finalement un agencement où deux moyens d'étanchéité sont intercalés dans tous les cas entre le logement 9 et l'extérieur.

Le rebord externe 26 entoure le rebord principal 25 à une faible distance. Les surfaces de ses parois sont en matériau réfléchissant la chaleur pour limiter les fuites. Quant au rebord interne 27, il s'étend immédiatement autour du tube télescopique 1 et le protège, ainsi que son contenu, contre une éventuelle pollution induite par le déploiement.

Par contre, un revêtement 31 apte à émettre par rayonnement la chaleur qu'il reçoit par conduction et de la résistance 18 est déposé sur la face externe du tube de protection 2 tout près de la soudure 30 et des résistances 18 et 18'.

Le déploiement du tube télescopique 1 est donc effectué par un chauffage de la résistance 18 suffisant pour fondre la soudure 30. Si la résistance 18 ne fonctionne pas, ce qui est cependant improbable, la résistance 18' est utilisée. Le ciment réfractaire 22, la couche isolante 23 et le rebord externe 26 économisent l'énergie de chauffage en la confinant à proximité de la soudure 30. Le revêtement 31 sert plutôt à évacuer vers l'extérieur la chaleur le plus rapidement possible après le déploiement afin d'éviter qu'elle ne se propage vers l'appareil 4. L'échauffement du tube de protection 2 est cependant modéré car il est relativement mince hors de l'extrémité 5. Le rebord interne 27 empêche des gouttelettes de fusion de la soudure 30 d'être projetées à l'intérieur du tube télescopique 1. Enfin, la couche isolante 23 limite la propagation de la chaleur au tube de protection 3, de même que la manchette 14 qui, en position déployée du tube télescopique 1, arrive en face de l'extrémité 5.

L'invention n'est pas limitée à l'application envisagée et pourrait être mise en oeuvre autrement. Certains des éléments décrits dans la réalisation préférée pourraient ainsi être omis. En particulier, l'appareil 4 destiné aux prélèvements des échantillons peut être rendu solidaire du tube télescopique 1 au lieu de rester immobile avec le tube de protection 3.

## Revendications

1. Dispositif de protection et de libération d'un tube télescopique (1) caractérisé en ce qu'il comprend des éléments élastiques (7) pour déployer le tube télescopique (1) à partir d'un état replié, des moyens de guidage (3) du déploiement du tube télescopique, un tube de protection (2) entourant le tube télescopique, un couvercle (6) fermant une extrémité du tube de protection (2) et comprimant le tube télescopique à l'état replié, le couvercle (6) et le tube télescopique (1) étant distincts, une soudure circulaire (30) imperméable aux gaz joignant le couvercle (6) au tube de protection (2), et un dispositif de chauffage (18) situé près de la soudure et apte à la faire fondre.

2. Dispositif suivant la revendication 1, caractérisé en ce que le dispositif de chauffage est une résistance électrique (18) logée dans un creux (17) du tube de protection.

3. Dispositif suivant l'une quelconque des revendications 1 ou 2, caractérisé en ce qu'au moins une barrière thermique (22, 23, 14) est intercalée entre le dispositif de chauffage et le tube télescopique (1).

4. Dispositif suivant les revendications 2 et 3, caractérisé en ce qu'une barrière thermique est constituée par un matériau réfractaire (22) emplissant le creux (17) dans lequel la résistance (18) chauffante est logée, la résistance chauffante étant plus précisément logée dans une portion du creux adjacente à la soudure.

5. Dispositif suivant la revendication 3, caractérisé en ce qu'une barrière thermique (23) est constituée par une couche de matériau isolant thermique sur la face interne du tube de protection (2).

6. Dispositif suivant l'une quelconque des revendications 1 à 5, caractérisé en ce que le couvercle est composé d'une face plane (24) comprimant le tube télescopique et d'un rebord circulaire (25) entourant l'extrémité du tube de protection, la soudure (30) étant placée entre le rebord et le tube de protection.

7. Dispositif suivant la revendication 6, caractérisé en ce que le couvercle comprend en outre un rebord externe (26), entourant le rebord portant la soudure, réfléchissant la chaleur.

8. Dispositif suivant l'une quelconque des revendications 1 à 7, caractérisé en ce que le couvercle comprend un rebord interne (27) placé entre la soudure (30) et le tube télescopique (1).

9. Dispositif suivant l'une quelconque des revendications 1 à 8, caractérisé en ce qu'il comprend un joint circulaire d'étanchéité (29) entre le couvercle et le tube de protection.

10. Dispositif suivant l'une quelconque des revendications 1 à 9, caractérisé en ce que le moyen de guidage (3) est un tube interne autour duquel une portion (14) du tube télescopique coulisse en se déployant.

11. Dispositif suivant la revendication 10, caractérisé en ce qu'une portion (14) du tube télescopique (1) est placée entre le dispositif de chauffage (18) et le tube de guidage à l'état déployé du tube télescopique.

12. Dispositif suivant l'une quelconque des revendications 1 à 11, caractérisé en ce qu'il comporte un moyen (10) pour ralentir le déploiement du tube télescopique (1).

13. Dispositif suivant l'une quelconque des revendications 1 à 12, caractérisé en ce que le tube de protection comporte une portion de face externe adjacente à la soudure (30) et au dispositif de chauffage (18) munie d'un revêtement (31) émissif de la chaleur par rayonnement.

14. Dipositif suivant l'une quelconque des revendications 1 à 13, caractérisé en ce qu'il comporte un autre dispositif de chauffage (18') proche du premier.

FIG. 1 B

FIG. 1 C

FIG. 1 A

FIG. 2

FIG. 3

EP 0 481 888 A1

**Office européen des brevets**

# RAPPORT DE RECHERCHE EUROPEENNE

Numero de la demande

EP    91 40 2764

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 139 062 (J.R. RAGO)<br>* colonne 1, ligne 35 - ligne 58 *<br>* colonne 2, ligne 1 - ligne 68; figures *<br>--- | 1 | B64G9/00<br>G01N1/22 |
| A | GB-A-1 011 680 (WESTLAND AIRCRAFT LTD.)<br>* le document en entier *<br>--- | 1,2 | |
| A | US-A-3 077 779 (H.E. FROELICH ET AL.)<br><br>----- | | |

**DOMAINES TECHNIQUES RECHERCHES (Int. Cl.5)**

B64G
G01N
F16B
B65D

Le présent rapport a été établi pour toutes les revendications

| Lieu de la recherche | Date d'achèvement de la recherche | Examinateur |
|---|---|---|
| LA HAYE | 09 JANVIER 1992 | HODSON C.M. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)